# EUROPÄISCHE PATENTSCHRIFT

(11) **EP 4 217 806 B1**
(45) Veröffentlichungstag und Bekanntmachung des Hinweises auf die Patenterteilung: **28.01.2026**
(21) Anmeldenummer: 21778429.7
(22) Anmeldetag: 17.09.2021
(51) Int. Cl.: G05B 19/418

(54) **QUALITÄTSKONTROLLE FÜR IN SERIE GEFERTIGTE PRODUKTE**
QUALITY CONTROL FOR PRODUCTS PRODUCED IN SERIES
CONTRÔLE QUALITÉ POUR PRODUITS FABRIQUÉS EN SÉRIE

(30) Priorität: 25.09.2020 DE 102020212102
(43) Veröffentlichungstag der Anmeldung: 02.08.2023
(73) Patentinhaber: Robert Bosch GmbH, 70442 Stuttgart (DE)
(72) Erfinder: LACHMANN, Martin, 99826 Berka V. D. Hainich (DE); STARK, Tilman, 99817 Eisenach (DE); SCHOTT, Marco, 99817 Eisenach (DE)
(86) Internationale Anmeldenummer: PCT/EP2021/075674
(87) Internationale Veröffentlichungsnummer: WO 2022/063702

(56) Entgegenhaltungen:
- EP-A1- 3 352 013
- EP-A1- 3 667 445
- US-A1- 2020 166 909
- SHICHANG DU ET AL: "A robust approach for root causes identification in machining processes using hybrid learning algorithm and engineering knowledge", JOURNAL OF INTELLIGENT MANUFACTURING, KLUWER ACADEMIC PUBLISHERS, BO, vol. 23, no. 5, 28 December 2010 (2010-12-28), pages 1833 - 1847, XP035112206, ISSN: 1572-8145, DOI: 10.1007/S10845-010-0498-9
- RIBEIRO MARCO TULIO MARCOTCR@GMAIL COM ET AL: ""Why Should I Trust You?" Explaining the Predictions of Any Classifier", PROCEEDINGS OF THE 2017 ACM ON CONFERENCE ON INFORMATION AND KNOWLEDGE MANAGEMENT , CIKM '17, ACM PRESS, NEW YORK, NEW YORK, USA, 13 August 2016 (2016-08-13), pages 1135 - 1144, XP058631176, ISBN: 978-1-4503-4918-5, DOI: 10.1145/2939672.2939778

## Beschreibung

Die vorliegende Erfindung betrifft die Qualitätskontrolle für in Serie gefertigte Produkte, und hier insbesondere für solche Produkte, die erst nach einer Vielzahl von Bearbeitungsschritten einer funktionalen Fertigungsendkontrolle unterzogen werden.

### Stand der Technik

Bei komplexen Produkten, die in einer Vielzahl von Bearbeitungsschritten gefertigt werden, wird die Qualitätskontrolle mit steigender Anzahl der Bearbeitungsschritte schwieriger. Eine Qualitätskontrolle nach jedem Bearbeitungsschritt kostet in der Summe zu viel Zeit, um für eine 100-%-Kontrolle in der Serienfertigung praktikabel zu sein. Häufig reicht die Zeit nur für eine Fertigungsendkontrolle ("end-of-line"-Test) am Ende der Bearbeitung aus.

Wenn sich bei dieser Endkontrolle ein Problem zeigt, gibt das konkrete Problem nicht immer einen brauchbaren Hinweis auf seine tieferliegende Ursache. Die Ursachenforschung ist arbeitsintensiv und steht unter großem Zeitdruck, da das Qualitätsproblem oder gar ein hieraus resultierender Produktionsstopp hohe laufende Kosten verursacht, bis die Ursache gefunden und abgestellt ist.

Aus der DE 101 38 760 A1 ist ein Herstellungsverfahren für komplexe Produkte bekannt, bei dem einem in Herstellung befindlichen Produkt ein produktspezifischer elektronischer Datenträger zugeordnet wird. Auf diesem Datenträger werden die Herstellungsschritte protokolliert. Der elektronische Datenträger bleibt dem Produkt auch nach der Fertigstellung fest zugeordnet, so dass Qualitätsprobleme zurückverfolgt werden können.

Die EP 3 667 445 A1 offenbart ein Verfahren und eine Vorrichtung zur Herstellung eines Produktes. Das Produkt wird hierbei in zumindest einem Produktionsschritt hergestellt. Optional erfolgt nach zumindest einem der Produktionsschritte eine Qualitätskontrolle zur Ermittlung eines Qualitätsindex des jeweiligen Produktes. Um die Qualitätskontrolle einzusparen, erfolgt eine Bestimmung eines Qualitätsindikators des jeweiligen Produktes anhand von Produktionsdaten. Die Produktionsdaten werden vorteilhaft von Sensoren bereitgestellt. Die Berechnung des Qualitätsindikators des jeweiligen Produktes erfolgt vorzugsweise mithilfe eines lernfähigen Algorithmus. Der lernfähige Algorithmus kann mit Qualitätsindizes von einer Qualitätskontrolleinheit und den entsprechenden Produktionsdaten angelernt und/oder verbessert werden. Das Anlernen des lernfähigen Algorithmus erfolgt vorzugsweise mit Hilfe einer weiteren Recheneinheit, insbesondere in einer Cloud.

Die EP 3 352 013 A1 offenbart die Erzeugung von Produktionsdaten für die Steuerung oder Überwachung eines Produktionsprozesses.

Die US 2020/0166909 A1 offenbart Machine Learning basierte Methoden und Systeme für automatisierte Objektdefektklassifikation und adaptive Echtzeitsteuerung von Herstellungsprozessen.

Die Veröffentlichung SHICHANG DU ET AL.:"A robust approach for root causes identification in machining processes using hybrid learning algorithm and engineering knowledge", JOURNAL OF INTELLIGENT MANUFACTURING, KLUWER ACADEMIC PUBLISHERS, BO, Bd 23, Nr. 5, 28. Dezember 2010, Seiten 1833-1847, XP035112206 offenbart zur Verbesserung der Produktqualität und Produktivität einen neuen robusten Ansatz für Root Cause Identifikation in Maschinenprozessen unter Verwendung von Hybriden Lernalgorithmen.

Die Veröffentlichung RIBEIRO MARCO TULIO MARCOTCR@GMAIL COM ET AL:'°'Why Should I Trust You?" Explaining the Predictions of Any Classifier", PROCEEDINGS OF THE 2017 ACM CONFERENCE ON INFORMATION AND KNOWLEDGE MANAGEMENT, CIKM '17, ACM PRESS, NEW YORK, USA, 13. August 2016, Seiten 1135-1144, XP058631176 offenbart eine neue Erklärungstechnik, die die Vorhersagen eines Klassifikators in einer interpretierbaren und glaubwürdigen Weise erklärt, durch lernen eines interpretierbaren Modells lokal um die Vorhersage herum.

### Offenbarung der Erfindung

Im Rahmen der Erfindung wurde ein Verfahren zur Qualitätskontrolle eines in Serie gefertigten Produkts entwickelt.

Das Verfahren beinhaltet, dass während der Herstellung des Produkts eine Vielzahl von Parametern, die den Herstellungsprozess charakterisieren, aufgezeichnet wird. Der Herstellungsprozess ist insoweit mit einer "black box"-Funktion vergleichbar, von der nur bekannt ist, dass sie mindestens die aufgezeichneten Parameter als Argumente hat und diese Argumente auf ein Maß für die Produktqualität abbildet.

Als Parameter, die den Herstellungsprozess charakterisieren, kommen insbesondere beispielsweise Einstellungen mindestens einer Maschine in Betracht, die das Produkt während des Herstellungsprozesses bearbeitet, wie etwa beispielsweise ein Schweißstrom, eine auf das Produkt auszuübende Kraft oder ein Sputterstrom einer Beschichtungsanlage. Es ist nicht immer möglich, im Interesse einer guten Reproduzierbarkeit des Produkts während der Serienfertigung diese Parameter einfach konstant zu halten. Vielmehr müssen diese Parameter häufig situationsabhängig eingestellt werden, beispielsweise, um bestimmte interessierende Größen auf Sollwerte zu regeln.

Auch eine seit der letzten Vornahme von Wartungs- und/oder Einstellarbeiten an mindestens einer Maschine, die das Produkt während des Herstellungsprozesses bearbeitet, verstrichene Zeitdauer kann einen positiven oder negativen Einfluss auf die Produktqualität haben. Positiv kann beispielsweise wirken, dass die Maschine nach der Wartung wieder gut justiert ist. Negativ kann beispielsweise wirken, dass eine Vakuumkammer unmittelbar nach dem auf die Wartung folgenden Abpumpen nicht so sauber ist wie nach vielen Monaten ungebrochenen Vakuums.

Analog kann auch ein Maß für einen Abnutzungszustand mindestens eines Werkzeugs, das während des Herstellungsprozesses in Kontakt mit dem Produkt kommt, mit der Produktqualität korreliert sein. Viele Werkzeuge für die mechanische Bearbeitung sind Verschleißteile, die für eine bestimmte Lebensdauer spezifiziert sind und deren Beschaffenheit sich während dieser Lebensdauer ständig graduell ändert. Dieses Maß kann beispielsweise durch eine physikalische Messung am Werkzeug erhalten werden, aber alternativ oder in Kombination hierzu beispielsweise auch mit einem Standzeitzähler, der die Betriebsdauer des Werkzeugs, und/oder die Anzahl der mit dem Werkzeug bereits bearbeiteten Produkte, zählt. Die physikalische Messung kann sich beispielsweise auf Abmessungen des Werkzeugs beziehen, aber auch beispielsweise auf dessen Härte oder Zähigkeit.

Weiterhin können beispielsweise auch beliebige Messwerte aus der Messung mindestens einer physikalischen, insbesondere beispielsweise elektrischen, Messgröße am in Herstellung befindlichen Produkt, an einem für die Herstellung verwendeten Vorprodukt und/oder in der Umgebung, in der das Produkt hergestellt wird, als Parameter herangezogen werden. So können beispielsweise Vorprodukte routinemäßig auf ihre physikalische Beschaffenheit oder stoffliche Materialzusammensetzung (etwa ihre Reinheit) geprüft werden, um gegebenenfalls eruieren zu können, ob Änderungen der Beschaffenheit oder Materialzusammensetzung sich auf die Qualität des Produkts auswirken. Die Beschaffenheit kann sich beispielsweise auf die Abmessungen, die Härte, die Zähigkeit, die Kristallstruktur oder magnetische Eigenschaften beziehen. Auch können beispielsweise klimatische Bedingungen (etwa Temperatur und/oder Luftfeuchtigkeit) in der räumlichen Umgebung, in der das Produkt hergestellt wird, mitgeschrieben werden. So kann beispielsweise die Endfestigkeit eines Klebstoffs von der während der Verarbeitung herrschenden Temperatur und Luftfeuchtigkeit abhängen.

Schließlich kann auch beispielsweise mindestens ein Zeitstempel mindestens eines Zeitpunkts, zu dem mindestens ein Bearbeitungsschritt an dem Produkt vorgenommen wurde, als möglicher Parameter herangezogen werden, der sich auf die Qualität des Produkts auswirkt. Wenn beispielsweise ein neues, bislang unbekanntes Qualitätsproblem auftritt, lässt sich dieses mit einer ungefähren Kenntnis des Zeitraums, in dem es aufgetreten ist, zumindest eingrenzen.

Das Produkt wird während des Herstellungsprozesses oder auch am Ende des Herstellungsprozesses einer Kontrolle unterzogen, wie beispielsweise einer Fertigungsendkontrolle ("end-of-line test", EoL). Diese Kontrolle beinhaltet mindestens eine physikalische Beobachtung des Produkts, und/oder mindestens einen physikalischen Funktionstest des Produkts, sowie einen Vergleich des bei der Beobachtung, bzw. bei dem Funktionstest, erhaltenen Ergebnisses mit einer vorgegebenen Referenz. So kann beispielsweise ein Sensor, wie etwa ein Drucksensor oder ein Luftmassenmesser, einem oder mehreren Test-Reizen ausgesetzt werden, und es kann dann geprüft werden, ob die Reaktion des Sensors auf diese Test-Reize in einem vorgegebenen Toleranzband liegt. Durch den Vergleich wird eine Qualitätsbeurteilung des Produkts ermittelt.

Die Qualitätsbeurteilung kann beispielswiese eine Einteilung in die Klassen "Super", "OK", "nicht OK = NOK" sowie beliebige Zwischenstufen umfassen. Beispielsweise kann ein Produkt in Antwort darauf, dass ein konkreter Mangel bzw. Schaden erkannt worden ist, wie etwa ein Riss oder ein Fehlen von Material, in die Qualitätsklasse "nicht OK" einsortiert werden.

In Antwort darauf, dass die Qualitätsbeurteilung ein vorgegebenes Kriterium erfüllt, d.h. zu einer Einteilung in eine entsprechende Klasse führt, und beispielsweise auf eine nicht den Anforderungen entsprechende Qualität des Produkts (Klasse "NOK") hindeutet, werden Maßnahmen zur Ursachenforschung eingeleitet. Hierzu werden die während der Herstellung des Produkts aufgezeichneten Parameter einem trainierten Machine Learning-Modell zugeführt und von diesem trainierten Machine Learning-Modell auf eine Qualitätsprognose für das Produkt abgebildet. Umgekehrt kann aber auch völlig analog beispielsweise nach einer Ursache dafür gesucht werden, warum ein bestimmtes Exemplar des Produkts besonders gut geraten ist und der Klasse "Super" zugeordnet wurde. Wenn sich dies schlüssig erklären lässt, kann der Herstellungsprozess möglicherweise optimiert werden. Die Qualitätsprognose ist jeweils eine Prognose der Qualitätsbeurteilung.

Unter einem Machine Learning-Modell wird insbesondere ein Modell angesehen, das eine mit anpassbaren Parametern parametrierte Funktion mit großer Kraft zur Verallgemeinerung verkörpert. Die Parameter können beim Training eines Machine Learning-Modells insbesondere dergestalt angepasst werden, dass bei Eingabe von Lern-Eingabedaten in das Machine Learning-Modell zugehörige vorab bekannte Lern-Ausgabedaten möglichst gut reproduziert werden. Das Machine Learning-Modell kann insbesondere ein künstliches neuronales Netzwerk, KNN, beinhalten, und/oder es kann ein KNN sein. Es können aber auch beispielsweise Gradient Boosted Trees oder Support Vector Machines verwendet werden.

Es wird nun geprüft, ob die Qualitätsprognose im Einklang mit der durch die physikalische Kontrolle erhaltenen Qualitätsbeurteilung steht. Dies ist beispielsweise dann der Fall, wenn die physikalische Kontrolle des Produkts einerseits und die Qualitätsprognose durch das Machine Learning-Modell andererseits dem Produkt gleiche oder ähnliche Bewertungszahlen oder Klassen für seine Qualität zuordnen. Hierbei kann unter "ähnlich" beispielsweise verstanden werden, dass die Qualitätsprognose um nicht mehr als eine vorgegebene Anzahl von Klassen, bzw. um nicht mehr als einen vorgegebenen Betrag der Bewertungszahl, von der Qualitätsbeurteilung abweicht.

In diesem Fall wird davon ausgegangen, dass das Machine Learning-Modell den ausweislich der physikalischen Kontrolle des Produkts vorliegenden Qualitätszustand hinreichend erklärt. Um hieraus wiederum die tieferliegende Ursache eines Qualitätsproblems zu ergründen, werden die aufgezeichneten Parameter einem Erklärer für das Machine Learning-Modell zugeführt. Dieser Erklärer ordnet einzelnen aufgezeichneten Parametern, und/oder Kombinationen aus den aufgezeichneten Parametern, quantitative Beiträge zu der Qualitätsprognose zu. Unter dem quantitativen Beitrag eines Parameters, bzw. einer Kombination von Parametern, kann insbesondere das Gewicht verstanden werden, mit dem dieser Parameter, bzw. diese Kombination von Parametern, in die Qualitätsprognose eingegangen ist.

Aus den quantitativen Beiträgen wird eine wahrscheinliche, wahrscheinlichste und/oder voraussichtliche Ursache für die bei der Kontrolle erhaltene Qualitätsbeurteilung ausgewertet.

So kann der Erklärer beispielsweise das Resultat liefern, dass die vom Machine Learning-Modell gelieferte Qualitätsprognose "nicht OK" mit hoher oder höchster Wahrscheinlichkeit darauf zurückzuführen ist, dass
- der Durchmesser einer Bohrung an der unteren Toleranzgrenze liegt,
- der in diese Bohrung einzuführende Bolzen von einem bestimmten Zulieferer stammt und
- versucht wurde, diesen Bolzen bei einer grenzwertigen Temperatur in die Bohrung einzuführen,
woraufhin der Bolzen sich in der Bohrung verklemmt hat und nicht so weit eingeführt werden konnte wie beabsichtigt.

Insbesondere kann beispielsweise unterschieden werden, ob ein bestimmter Parameter bereits für sich genommen oder nur in Kombination mit anderen Parametern einen maßgeblichen Einfluss auf die Qualitätsprognose hat.

Wenn beispielsweise der quantitative Beitrag des Parameters "Durchmesser der Bohrung" einen ersten vorgegebenen Schwellwert überschreitet, kann der Erklärer das Resultat liefern, dass der Durchmesser der Bohrung auch schon für sich genommen zur Qualitätsprognose "nicht OK" führt.

Wenn hingegen die quantitativen Beiträge der Parameter "Durchmesser der Bohrung", "Zulieferer des Bolzens" und "Temperatur" jeweils nur einen zweiten vorgegebenen Schwellwert überschreiten, der signifikant geringer ist als der erste vorgegebene Schwellwert, kann der Erklärer das Resultat liefern, dass die Kombination dieser drei Parameter für die Qualitätsprognose "nicht OK" maßgeblich ist.

Die physikalische Kontrolle des Produkts einerseits und die Ursachenforschung mit dem Machine Learning-Modell andererseits wirken in mehrerlei Hinsicht synergistisch zusammen.

Indem das Machine Learning-Modell nur in Fällen herangezogen wird, die aus Sicht der physikalischen Kontrolle gemäß dem vorgegebenen Kriterium besonders sind und daher einer näheren Untersuchung bedürfen, wird auf "uninteressante" Normalfälle keine Rechenzeit für das Machine Learning-Modell verwendet. In diesen Normalfällen kann das Machine Learning-Modell keine neue Erkenntnis liefern, denn dass der Herstellungsprozess genau so läuft wie erwartet, steht ja schon nach der physikalischen Kontrolle fest. Es ist daher vorteilhaft, die insgesamt für das Machine Learning-Modell verwendete Rechenzeit auf die deutlich weniger zahlreichen besonderen Fälle zu konzentrieren. Auf jeden solchen Fall kann dann im Durchschnitt mehr Rechenzeit verwendet werden, ohne dass die Ursachenforschung zum begrenzenden Faktor für den Durchsatz der Fertigung wird.

Die physikalische Kontrolle liefert nicht nur den Anlass dafür, das Machine Learning-Modell heranzuziehen, sondern wird auch genutzt, um die Aussage dieses Machine Learning-Modells zu plausibilisieren. Wenn sich hier ein Widerspruch ergibt und etwa das Machine Learning-Modell vorhersagt, dass das bei der physikalischen Kontrolle als fehlerhaft identifizierte Produkt eigentlich in Ordnung sein sollte, ist eine mit dem Erklärer ermittelte Erklärung der Qualitätsprognose von vornherein nicht mehr glaubwürdig. Daher kann dann der Rechenaufwand für den Erklärer gleich ganz eingespart werden. Zugleich liefert ein solcher Widerspruch einen Hinweis darauf, dass möglicherweise die vom Machine Learning-Modell gelernten Fehlerursachen nicht zutreffen und die wahre Ursache abseits dieser bereits gelernten Fehlerursachen zu suchen ist. Auch hierin liegt schon eine deutliche Eingrenzung der möglichen Fehlerursache, die wertvolle Zeit spart.

Letztendlich wird somit eine Ursache insbesondere dafür, dass ein Produkt die physikalische Qualitätskontrolle nicht bestanden hat, schneller und mit besserer Treffsicherheit ermittelt. Die Fehlerursache kann dann schneller beseitigt werden, so dass weniger Ausschuss an Produkten, bzw. weniger Ausfallzeit der Fertigung, entsteht.

In einer besonders vorteilhaften Ausgestaltung werden während der Herstellung des Produkts zwischen 50 und 10.000, bevorzugt zwischen 100 und 2.000, Parameter aufgezeichnet. Dies ist der Bereich, in dem einerseits einfachere Methoden für die Ursachenforschung, die kein Machine Learning-Modell verwenden, an ihre Grenzen stoßen und andererseits der mit der Anzahl der Parameter wachsende Rechenaufwand für die Auswertung des Machine Learning-Modells und insbesondere des zugehörigen Erklärers noch hinreichend schnell abgearbeitet werden kann.

Aus analogen Gründen ist es vorteilhaft, die Parameter aufzuzeichnen, während das Produkt zwischen 10 und 200, bevorzugt zwischen 50 und 150, Herstellungsschritte durchläuft.

In einer besonders vorteilhaften Ausgestaltung wird ein Erklärer gewählt, der eine Approximation des Machine Learning-Modells umfasst. Diese Approximation ist so gewählt, dass sie das Verhalten des Machine Learning-Modells zumindest lokal nachbildet und zugleich eine geringere Komplexität aufweist als das Machine Learning-Modell, d.h. einfacher interpretierbar ist. Die Approximation kann insbesondere beispielsweise eine mit geringerer Komplexität, und/oder mit größerer Geschwindigkeit, zu berechnende Näherung des Modells umfassen. Dabei kann sich der Begriff "Komplexität" insbesondere auf den Bedarf an Speicher oder Taktzyklen, sowie alternativ oder in Kombination hierzu einen Bedarf an Parametern und/oder Verknüpfungen zwischen Parametern für die Darstellung der Näherung, umfassen. Insbesondere eine geringere Anzahl von Parametern und/oder Verknüpfungen zwischen Parametern kann eine Näherung im Vergleich zum ursprünglichen Machine Learning-Modell vorteilhaft einfacher interpretierbar machen.

Hierhinter steckt die Erkenntnis, dass gerade Qualitätsprobleme, die sich aus vergleichsweise geringen Veränderungen der Parameter des Herstellungsprozesses ergeben, mit einer solchen Approximation vergleichsweise schnell gefunden werden können. Zugleich waren gerade solche Qualitätsprobleme bislang nur schwer zu diagnostizieren, wie das eingangs erwähnte Beispiel des in einer Bohrung verklemmten Bolzens zeigt. Krasse Ausfälle bezüglich eines oder mehrerer Parameter, die den Gültigkeitsbereich der lokalen Nachbildung verlassen, haben hingegen in der Regel Ursachen, die auch ohne den Einsatz von Machine Learning offensichtlich sind, wie beispielsweise eine komplett ausgefallene Bearbeitungsmaschine.

Insbesondere kann beispielsweise ein Erklärer gewählt werden, der mindestens eine Local Interpretable Model-Agnostic Explanation, LIME, der Qualitätsprognose liefert. Ein solcher Erklärer nähert das Verhalten des Machine Learning-Modells lokal multilinear an.

In einer weiteren besonders vorteilhaften Ausgestaltung wird ein Erklärer gewählt, der dazu ausgebildet ist, ausgehend von Abfolgen der Parameter, in denen ein konkreter Parameter oder eine konkrete Kombination von Parametern nicht vorkommt, jeweils den marginalen Beitrag zur Qualitätsprognose zu ermitteln, der durch das Hinzufügen des konkreten Parameters, bzw. der konkreten Kombination von Parametern, erzielt wird. Insbesondere kann beispielswiese durch eine entsprechende Auswertung für viele Abfolgen und Mittelung über diese Abfolgen ein mittlerer marginaler Beitrag des konkret untersuchten Parameters, bzw. der konkret untersuchten Kombination von Parametern, ermittelt werden. Es werden also Situationen mit dem Parameter, bzw. mit der Kombination von Parametern, einerseits und Situationen ohne den Parameter, bzw. ohne die Kombination von Parametern, andererseits miteinander verglichen. Dies ist ein Stück weit analog zum Anmessen einer Sehhilfe bei einem Optiker, bei dem der Kunde immer wieder gefragt wird, mit welcher von zwei aktuell zur Auswahl stehenden Konfigurationen er eine Zahlenoder Buchstabenreihe besser erkennen kann.

Auf diese Weise können insbesondere beispielsweise die Einflüsse mehrerer Parameter oder Kombinationen von Parametern auf die Qualitätsprognose untersucht werden. Dabei können diese Parameter auch gegenläufige Einflüsse auf die Qualitätsprognose haben. So können beispielsweise für ein konkretes Exemplar des Produkts bestimmte Aspekte des Herstellungsprozesses sehr gut gelungen sein, während auf der anderen Seite bestimmte Aspekte überhaupt nicht gelungen sind. Manche nicht gelungenen Aspekte lassen sich dann möglicherweise durch die gelungenen Aspekte "heilen", andere wiederum nicht. Die Berechnung des marginalen Beitrags ist modell-agnostisch. Das heißt, dass das Modell als "black box" so, wie es ist, genutzt werden kann und keine vereinfachenden Annahmen gemacht werden müssen.

Insbesondere kann beispielsweise ein Erklärer gewählt werden, der dazu ausgebildet ist, Shapley-Werte für den konkreten Parameter, bzw. für die konkrete Kombination von Parametern, in Bezug auf das Machine Learning-Modell oder einen bedingten Erwartungswert des Machine Learning-Modells zu ermitteln. Für die Shapley-Werte gibt es mathematische Garantien dahingehend, dass die quantitativen Beiträge aller Parameter sich zur Differenz zwischen der durchschnittlichen Qualitätsprognose und der Qualitätsprognose für das konkrete untersuchte Produkt addieren. Weiterhin können Shapley-Werte für beliebige Permutationen der Reihenfolgen, in denen Parameter den besagten Abfolgen hinzugefügt werden, ermittelt und über diese Reihenfolgen gemittelt werden.

Shapley-Werte, die in Bezug auf einen bedingten Erwartungswert des Machine Learning-Modells ermittelt werden, werden auch SHAP-Werte (Shapley Additive Explanations) genannt. Die SHAP-Werte können insbesondere beispielsweise als Shapley-Werte einer bedingten Erwartungswertfunktion des Machine Learning-Modells bestimmt werden, wie dies beispielsweise in (S. M. Lundberg, S.-I. Lee, "A Unified Approach to Interpreting Model Predictions", 31st Conference on Neural Information Processing Systems (NIPS 2017), Long Beach, CA, USA, https://papers.nips.cc/paper/7062-a-unified-approach-to-interpreting-modelpredictions) beschrieben ist. Insbesondere können mit der bedingten Erwartungswertfunktion vereinfachte Eingaben an das Machine-Learning-Modell definiert werden.

Der Preis für die besagten mathematischen Garantien ist, dass die Berechnung der Shapley-Werte mit steigender Anzahl von Parametern exponentiell aufwändiger wird. In diesem Zusammenhang ist es vorteilhaft, dass der Erklärer während der Serienfertigung nicht für jedes einzelne Exemplar des Produkts bemüht werden muss, sondern nur für solche Exemplare des Produkts, die anhand der physikalischen Kontrolle positiv oder negativ auffällig sind. Flankierend hierzu kann ein Machine Learning Modell eingesetzt werden, das durch den Erklärer besonders einfach interpretierbar ist. Wenn beispielsweise ein Machine Learning-Modell auf der Basis von Gradient Boosted Trees verwendet wird, kann beispielsweise als Erklärer SHAP mit einem "Tree explainer" genutzt werden, der für die zugrunde liegende Struktur des Modells besonders schnell und zuverlässig agiert.)

Die Shapley-Werte, bzw. die SHAP-Werte, liefern marginale Beiträge von Parametern oder auch von Kombinationen mehrerer Parameter und erleichtern so die Ursachenforschung für eine bestimmte Qualitätsprognose. So kann beispielsweise erkannt werden, ob die stoffliche Zusammensetzung eines Werkstücks, die Temperatur bei der Verarbeitung oder die Qualität einer mechanischen Bearbeitung die Ursache für eine schlechte Endqualität des Werkstücks war.

Dies ist ein Stück weit analog zu Bemühungen, die Hauptursachen für Neuinfektionen mit dem Coronavirus Sars-CoV-2 auf einer möglichst lokalen Ebene ausfindig zu machen, um genau diese Hauptursachen abstellen und gleichzeitig so viel öffentliches Leben wie möglich zulassen zu können. Hier kann beispielsweise eine Strategie sein, jeder Maßnahme aus einem vorgegebenen Katalog, wie etwa Kontaktbeschränkungen, Maskenpflicht oder Grenzschließungen, einen Beitrag zur Senkung der Reproduktionszahl R (also der Zahl der von einem Infizierten durchschnittlich angesteckten Menschen) zuzuordnen. Da für jede Maßnahme die Kosten bekannt oder zumindest abschätzbar sind, können dann beispielsweise die Maßnahmen auf das Ziel optimiert werden, eine Reproduktionszahl R unter 1 mit möglichst geringen Gesamtkosten zu erreichen. In einer weiteren vorteilhaften Ausgestaltung wird aus den quantitativen Beiträgen, und/oder aus der zuvor ausgewerteten wahrscheinlichen, wahrscheinlichsten und/oder voraussichtlichen Ursache für die Qualitätsbeurteilung, zusätzlich mindestens ein Vorschlag für eine Änderung der Prozessführung des Herstellungsprozesses ausgewertet, nach deren Implementierung im Herstellungsprozess die dann hergestellten Produkte bei der Kontrolle voraussichtlich näher an der vorgegebenen Referenz liegen als die vor der Implementierung dieser Änderung hergestellten Produkte. Dieser Vorschlag kann beispielsweise in beliebiger Form an das Bedienungspersonal einer Fertigungslinie für das Produkt kommuniziert werden. Wenn beispielsweise der Vorschlag lautet, den Schweißstrom an einer Schweißmaschine anzupassen, kann dieser Vorschlag direkt an dieser Schweißmaschine angezeigt werden. Der Vorschlag kann beispielsweise auch lauten, eine Temperatur in einem Bearbeitungsraum zu senken, wobei es dem Bedienungspersonal überlassen bleibt, wie genau dies umgesetzt wird.

Die bevorzugte Ausgestaltung der Erfindung umfasst auch ein Verfahren zum Trainieren eines Machine Learning-Modells für die Qualitätsprognose eines in Serie gefertigten Produkts. Dieses Training hat zum Ziel, das Machine Learning-Modell für das zuvor beschriebene Verfahren einsatzfähig zu machen.

Bei diesem Verfahren wird eine Vielzahl von Parametern bereitgestellt, die den Herstellungsprozess des Produkts charakterisieren und während der Herstellung einer Vielzahl von Exemplaren des Produkts jeweils aufgezeichnet wurden.

Diese Parameter werden zunächst vorverarbeitet, bevor sie für das Training des Machine Learning-Modells verwendet werden. Zu diesem Zweck werden die Parameter anhand mindestens eines vorgegebenen Kriteriums nach auffälligen Veränderungen durchsucht. Das vorgegebene Kriterium kann beispielsweise beinhalten, dass die Parameter im Zeitverlauf Ausreißer und/oder scheinbare Sprünge aufweisen. In Antwort darauf, dass mindestens eine auffällige Veränderung aufgefunden wird, wird diese auffällige Veränderung entfernt, und/oder es wird eine Erklärung für die auffällige Veränderung von einem Operator angefordert und den Parametern hinzugefügt. Die Erklärung vom Operator kann beispielsweise eine Angabe beinhalten, dass eine Wartung durchgeführt oder ein Werkzeug oder Verbrauchsmaterial erneuert wurde. Das Entfernen der auffälligen Veränderung kann insbesondere beispielsweise beinhalten, dass Werte, die die auffällige Veränderung verkörpern, bereinigt oder aber ganz aus dem Satz der verfügbaren Parameter entfernt werden. Für jedes Exemplar des Produkts ist der Satz der verfügbaren Parameter somit dahingehend stimmig und vollständig, dass weder die Qualitätsprognose noch die zur Ermittlung dieser Qualitätsprognose herangezogenen Parameter erkennbar von weiteren Größen abhängen, die nicht im besagten Satz der Parameter enthalten sind.

Diese Vorverarbeitung ist wichtig für den Erfolg des Trainings. Die Datenquellen, die die Parameter aus dem industriellen Herstellungsprozess liefern, sind häufig nicht dafür ausgelegt, dass über lange Zeiträume oder gar auf verschiedenen Anlagen gesammelte Daten miteinander vergleichbar bleiben und somit schlüssig gepoolt werden können, um damit ein Machine Learning-Modell zu trainieren. So sind beispielsweise vor und nach einer Wartung einer Maschine aufgezeichnete Messgrößen mitunter nur bedingt miteinander vergleichbar, weil das Messinstrument oder der Messprozess durch die Wartung beeinflusst werden kann. Ein solcher Einfluss kann zu auffälligen Veränderungen in den Messdaten führen. Ohne die Vorverarbeitung könnten sich also beispielsweise Widersprüche in den Trainingsdaten ergeben, die den Fortgang des Trainings stark behindern oder das gelernte Modell verfälschen können.

Für jedes Exemplar des Produkts, für das Parameter bereitgestellt wurden, wird ein anhand mindestens einer physikalischen Beobachtung dieses Exemplars des Produkts, und/oder anhand mindestens eines physikalischen Funktionstests dieses Exemplars des Produkts, während oder nach der Herstellung erfasstes Qualitätsmaß bereitgestellt. Die zuvor bereitgestellten Parameter werden hingegen von dem Machine Learning-Modell auf Qualitätsprognosen für die jeweiligen Exemplare des Produkts abgebildet. Diese Qualitätsprognosen werden mit den hierzu korrespondierenden Qualitätsmaßen verglichen.

Modell-Parameter, die das Verhalten des Machine Learning-Modells charakterisieren, werden optimiert mit dem Ziel, dass bei weiterer Verarbeitung von Parametern durch das Machine Learning-Modell die Qualitätsprognosen näher an die Qualitätsmaße kommen. Die Modell-Parameter können beispielsweise Gewichte in einem neuronalen Netzwerk sein. Hierzu kann ein beliebiger Optimierungsalgorithmus verwendet werden. So kann beispielsweise die Abweichung der Qualitätsprognosen von den Qualitätsmaßen mit einer vorgegebenen Kostenfunktion bewertet werden. Der Wert der Kostenfunktion kann dann über Gradienten nach den Modell-Parametern auf die Modell-Parameter zurückpropagiert werden. Die Modell-Parameter können also in jedem Trainingsschritt gezielt so verändert werden, dass eine berechtigte Aussicht darauf besteht, hiermit den Wert der Kostenfunktion zu verbessern.

Das Qualitätsmaß kann beispielsweise eine Einteilung in die Klassen "Super", "OK", "nicht OK = NOK" sowie beliebige Zwischenstufen umfassen. Beispielsweise kann ein Produkt in Antwort darauf, dass ein konkreter Mangel bzw. Schaden erkannt worden ist, wie etwa ein Riss oder ein Fehlen von Material, in die Qualitätsklasse "nicht OK" einsortiert werden. Das Qualitätsmaß kann auch eine nach einem beliebigen vorgegebenen Prüfschema ermittelte Qualitätszahl sein. Auch eine erst nach dem späteren Ausfall des Produkts ermittelte Dauerhaltbarkeit des Produkts kann als Qualitätsmaß verwendet werden. So ist beispielsweise die Brenndauer eines Leuchtmittels bis zu seinem Ausfall als Maß für seine Qualität verwendbar.

In einer besonders vorteilhaften Ausgestaltung werden Parameter gewählt, die mindestens teilweise in einer vor Beginn der Serienfertigung des Produkts liegenden Musterbauphase des Produkts erfasst wurden. Dabei kann es sich insbesondere beispielsweise um den sogenannten "C-Musterbau" handeln, der bereits auf der für die spätere Serienproduktion vorgesehenen Produktionslinie durchgeführt wird. Die Art und Weise, wie das Machine Learning-Modell in dem zuvor beschriebenen Verfahren für die Erklärung von Auffälligkeiten an Produkten eingesetzt wird, ist vergleichsweise robust gegen Veränderungen, die der Übergang vom C-Musterbau auf die Serienfertigung den Trainingsdaten aufprägt. Hingegen profitiert das Training davon, dass gerade im C-Musterbau die Parameter noch eine deutlich größere Variabilität haben als in der späteren Serienfertigung. Insbesondere werden beispielsweise manche Parameter, wie etwa Sollwerte für Einstellungen an bestimmten Bearbeitungsmaschinen, noch während des C-Musterbaus erarbeitet bzw. feinabgestimmt.

Insbesondere kann beispielsweise auch das Training schon vor der Serienfertigung mit den bereits zu diesem Zeitpunkt verfügbaren Trainingsdaten begonnen werden. So kann das Machine Learning-Modell beispielsweise inkrementell immer weiter trainiert werden, wenn neue Trainingsdaten hinzukommen. Indem das Machine Learning-Modell nur vergleichsweise selten trainiert werden muss und hiermit insbesondere auch vor Beginn der Serienfertigung begonnen werden kann, steht das Machine Learning-Modell zeitnah zur Verfügung, wenn während der Serienfertigung plötzlich Probleme auftreten und schnell eine Erklärung benötigt wird.

In einer weiteren vorteilhaften Ausgestaltung werden aus dem trainierten Machine Learning-Modell Wirkzusammenhänge zwischen verschiedenen Parametern in Bezug auf die Qualität des Produkts, und/oder mindestens ein in Bezug auf die Qualität des Produkts unkritischer Toleranzbereich für mindestens einen Parameter, ausgewertet.

Beispielsweise kann die Tatsache, dass ein Wert eines ersten Parameters in einem ersten Bereich liegt, für sich genommen eine erste Wirkung haben. Die Tatsache, dass ein Wert eines zweiten Parameters in einem zweiten Bereich liegt, kann für sich genommen eine zweite Wirkung haben. Ein Wirkzusammenhang zwischen dem ersten Parameter und dem zweiten Parameter kann dann beispielsweise beinhalten, dass das gleichzeitige Auftreten eines Werts des ersten Parameters in dem ersten Bereich und eines Werts des zweiten Parameters in dem zweiten Bereich eine Wirkung hat, die sich von der Summe der ersten Wirkung und der zweiten Wirkung unterscheidet. Wie zuvor erwähnt, können beispielsweise ein grenzwertiger Durchmesser einer Bohrung, in die ein Bolzen einzuführen ist, eine ungenaue Fertigung dieses Bolzens sowie eine grenzwertige Temperatur dahingehend zusammenwirken, dass der Bolzen beim Einführen in die Bohrung verklemmt.

Unter einem Toleranzbereich eines Parameters kann insbesondere beispielsweise ein Bereich verstanden werden, in dem sich der Wert des Parameters bewegen kann, ohne dass die Qualität des Produkts sich von einem Nominalzustand entfernt. Wenn beispielsweise eine Bohrung einen Durchmesser von nominell 0,2 mm haben soll, kann das Produkt auch dann noch OK sein, wenn diese Bohrung tatsächlich einen Durchmesser von 0,19 oder 0,21 mm hat.

Die Wirkzusammenhänge und Toleranzbereiche können beispielsweise in der zuvor beschriebenen Weise unter Zuhilfenahme des Erklärers ermittelt werden. Die Wirkzusammenhänge und Toleranzbereiche können jedoch auch beispielsweise direkt aus den vom Machine Learning-Modell gelieferten Qualitätsprognosen ermittelt werden. So kann beispielsweise für eine Vielzahl von Konstellationen von Parametern jeweils eine Qualitätsprognose ermittelt werden. Wenn nun beispielsweise ausgehend von einer solchen Konstellation eine Kombination von Änderungen mehrerer Parameter zu einer Änderung der Qualitätsprognose führt, die hingegen nicht auftritt, wenn eine dieser Änderungen fortgelassen wird, dann kann ein Wirkzusammenhang zwischen den Parametern identifiziert werden.

Wenn ausgehend von einer Konstellation von Parametern ein Parameter in einem gewissen Bereich verändert werden kann, ohne dass sich die Qualitätsprognose ändert, kann dieser Bereich als Toleranzbereich für den Parameter identifiziert werden. Umgekehrt kann auf diesem Wege festgestellt werden, dass eine auch nur kleine Änderung eines bestimmten Parameters bereits zu einer Änderung der Qualitätsprognose führt. Dieser Parameter kann dann als ein Parameter identifiziert werden, von dem die Qualität des Produkts besonders kritisch abhängt.

Das trainierte Machine Learning-Modell kann also gleichsam als "digitaler Zwilling" des Fertigungsprozesses dienen, an dem die Wirkung der Änderungen von Parametern wesentlich schneller studiert werden können als am Fertigungsprozess selbst.

Das von dem Machine Learning-Modell erarbeitete Verständnis kann also unmittelbar genutzt werden, um die Zuverlässigkeit und Wirtschaftlichkeit des Herstellungsprozesses zu verbessern.

Das trainierte Machine Learning-Modell gibt insbesondere beispielsweise eine gut motivierte Möglichkeit für die Festlegung von Toleranzen an die Hand. Insbesondere Form- und Lagetoleranzen können auf diese Weise insbesondere so weit wie möglich gefasst werden. Dies vereinfacht die Fertigung und senkt die Fertigungskosten, die bei anspruchsvolleren Toleranzen überproportional ansteigen.

Aus dem trainierten Modell kann noch weiteres Wissen extrahiert und somit von der konkreten Fertigungslinie gelöst werden. So kann beispielsweise die Erkenntnis, dass die Qualität des Produkts besonders kritisch von bestimmten Parametern abhängt, eine Weiterentwicklung des Produkts und/oder des Herstellungsprozesses dahingehend anregen, dass genau diese Abhängigkeit weniger kritisch ist. Das Produkt kann dann mit weniger Aufwand, und/oder mit geringerer Ausschussrate, gefertigt werden.

Weiterhin erleichtert das extrahierte Wissen auch das Duplizieren einer Fertigungslinie am gleichen Standort oder an einem anderen Standort. Insbesondere schwere und/oder sperrige Teile im Zuliefergeschäft für den Automobilbau, wie etwa Fahrzeugbatterien, werden häufig nicht von einem Standort aus zentral in alle Welt verschickt, sondern dezentral gefertigt. Hierbei ist es wichtig, dass sich das Produkt unabhängig davon, aus welchem Werk es kommt, immer exakt gleich verhält.

Vorteilhaft werden ein XGBoost-Modell, eine Support Vector Machine, und/oder ein Explainable Boosting-Modell, als Machine Learning-Modell gewählt. Diese Typen von Modellen arbeiten besonders gut mit den zuvor beschriebenen Erklärern auf der Basis von LIME bzw. von Shapley-Werten zusammen.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern als Teil eines Systems zur Qualitätssicherung ausgeführt werden, das System zur Qualitätssicherung und den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer als Teil eines Systems zur Qualitätssicherung mit dem Computerprogramm, mit dem
maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigen:
Figur 1 Ausführungsbeispiel des Verfahrens 100 zur Qualitätskontrolle eines in Serie gefertigten Produkts 1;
Figur 2 Ausführungsbeispiel des Verfahrens 200 zum Trainieren des Machine Learning-Modells 2.

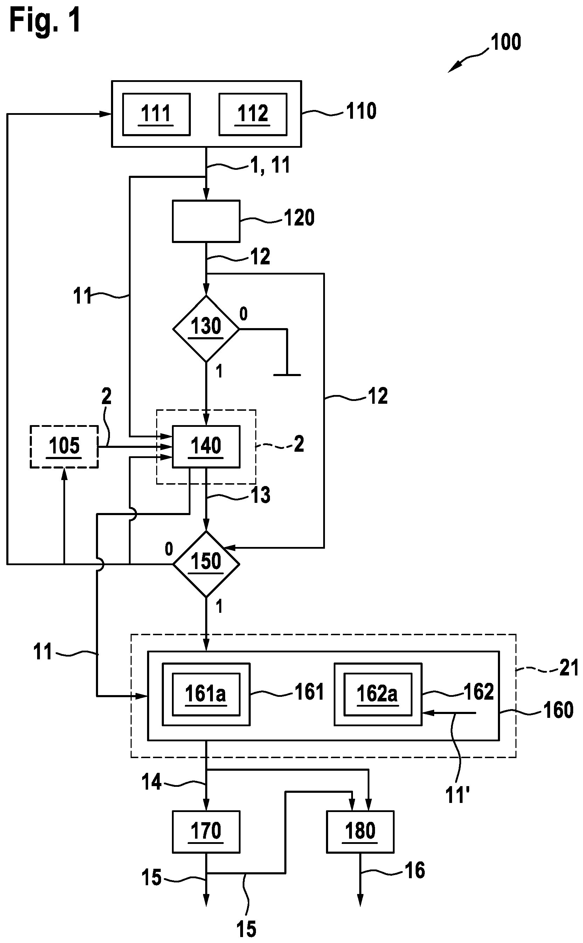

Figur 1 ist ein schematisches Ablaufdiagramm eines Ausführungsbeispiels des Verfahrens 100 zur Qualitätskontrolle eines in Serie gefertigten Produkts 1.

In Schritt 110 wird während der Herstellung des Produkts 1 eine Vielzahl von Parametern 11, die den Herstellungsprozess charakterisieren, aufgezeichnet. Hierbei können gemäß Block 111 insbesondere beispielsweise zwischen 50 und 10.000, bevorzugt zwischen 100 und 2.000, Parameter 11 aufgezeichnet werden. Gemäß Block 112 können die Parameter 11 aufgezeichnet werden, während das Produkt 1 zwischen 10 und 200, bevorzugt zwischen 50 und 150, Herstellungsschritte durchläuft.

In Schritt 120 wird das Produkt 1 einer physikalischen Kontrolle unterzogen. Diese physikalische Kontrolle führt auf eine Qualitätsbeurteilung 12.

In Schritt 130 wird geprüft, ob diese Qualitätsbeurteilung 12 ein vorgegebenes Kriterium erfüllt, wie etwa "Qualitätsnote schlechter als Ausreichend". Ist dies der Fall (Wahrheitswert 1), werden in Schritt 140 die während der Herstellung des Produkts 1 aufgezeichneten Parameter 11 einem trainierten Machine Learning-Modell 2 zugeführt und von diesem trainierten Machine Learning-Modell 2 auf eine Qualitätsprognose 13 für das Produkt 1 abgebildet.

In Schritt 150 wird sodann geprüft, ob die Qualitätsprognose 13 im Einklang mit der Qualitätsbeurteilung 12 steht. Wenn dies der Fall ist (Wahrheitswert 1), werden die aufgezeichneten Parameter 11 in Schritt 160 einem Erklärer 21 für das Machine Learning-Modell 2 zugeführt. Dieser Erklärer 21 ordnet einzelnen aufgezeichneten Parametern 11, und/oder Kombinationen aus den aufgezeichneten Parametern 11, quantitative Beiträge 14 zu der Qualitätsprognose 13 zu. Ist die Qualitätsprognose 13 hingegen nicht stimmig mit der Qualitätsbeurteilung 12 (Wahrheitswert 0 bei Schritt 150), kann das Modell in verbesserter Form, und/oder unter Einbeziehung weiterer Parameter, erneut trainiert werden.

Als Machine Learning-Modell 2 kann gemäß Block 105 insbesondere beispielsweise ein XGBoost-Modell, eine Support Vector Machine, und/oder ein Explainable Boosting-Modell gewählt werden.

Gemäß Block 161 kann beispielsweise ein Erklärer 21 gewählt werden, der eine Approximation des Machine Learning-Modells 2 umfasst. Diese Approximation bildet das Verhalten des Machine Learning-Modells 2 zumindest lokal nach und ist einfacher interpretierbar als das Machine Learning-Modell 2. Insbesondere kann beispielsweise gemäß Block 161a ein Erklärer 21 gewählt werden, der mindestens eine Local Interpretable Model-Agnostic Explanation, LIME, der Qualitätsprognose 13 liefert.

Gemäß Block 162 kann beispielsweise ein Erklärer 21 gewählt werden, der dazu ausgebildet ist, ausgehend von Abfolgen der Parameter 11, in denen ein konkreter Parameter 11' oder eine konkrete Kombination von Parametern 11' nicht vorkommt, jeweils den marginalen Beitrag zur Qualitätsprognose zu ermitteln, der durch das Hinzufügen des konkreten Parameters 11', bzw. der konkreten Kombination von Parametern 11', erzielt wird. Insbesondere kann beispielsweise gemäß Block 162a ein Erklärer 21 gewählt werden, der dazu ausgebildet ist, Shapley-Werte für den konkreten Parameter 11', bzw. für die konkrete Kombination von Parametern 11', in Bezug auf das Machine Learning-Modell 2 oder einen bedingten Erwartungswert hiervon zu ermitteln.

Aus den quantitativen Beiträgen 14 wird in Schritt 170 eine wahrscheinliche, wahrscheinlichste und/oder voraussichtliche Ursache 15 für die bei der Kontrolle 120 erhaltene Qualitätsbeurteilung 12 ausgewertet. Optional kann zusätzlich aus den quantitativen Beiträgen 14, und/oder aus der zuvor ausgewerteten wahrscheinlichen, wahrscheinlichsten und/oder voraussichtlichen Ursache 15, in Schritt 180 ein Vorschlag 16 für eine Änderung der Prozessführung des Herstellungsprozesses für das Produkt 1 ausgewertet werden. Diese Änderung ist so beschaffen, dass nach ihrer Implementierung im Herstellungsprozess hergestellte Produkte 1 bei der physikalischen Kontrolle 120 näher an der vorgegebenen Referenz liegen als vor Implementierung dieser Änderung hergestellte Produkte 1.

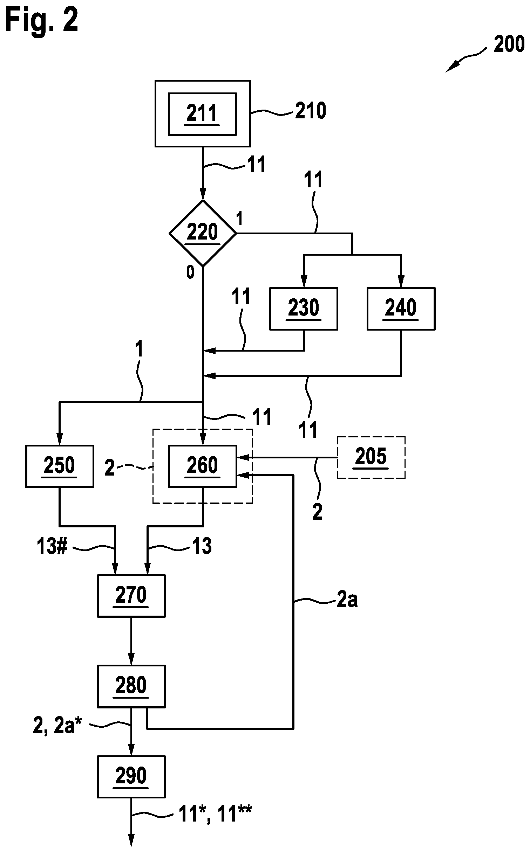

Figur 2 ist ein schematisches Ablaufdiagramm eines Ausführungsbeispiels des Verfahrens 200 zum Trainieren des Machine Learning-Modells 2 für die Qualitätskontrolle eines in Serie gefertigten Produkts 1. Dieses Machine Learning-Modell 2 kann insbesondere in dem zuvor beschriebenen Verfahren 100 eingesetzt werden.

In Schritt 210 wird eine Vielzahl von Parametern 11 bereitgestellt, die den Herstellungsprozess des Produkts 1 charakterisieren und während der Herstellung einer Vielzahl von Exemplaren des Produkts 1 jeweils aufgezeichnet wurden. Dabei können gemäß Block 211 insbesondere beispielsweise Parameter gewählt werden, die mindestens teilweise in einer vor Beginn der Serienfertigung des Produkts 1 liegenden Musterbauphase des Produkts 1 erfasst wurden.

In Schritt 220 werden die Parameter 11 im Rahmen einer Vorverarbeitung anhand mindestens eines vorgegebenen Kriteriums nach auffälligen Veränderungen durchsucht. Wenn solche Veränderungen festgestellt werden (Wahrheitswert 1), werden sie in Schritt 230 entfernt, und/oder es wird in Schritt 240 eine Erklärung für die jeweilige auffällige Veränderung von einem Operator angefordert und den Parametern 11 hinzugefügt.

Die so vorverarbeiteten Parameter 11 werden in Schritt 260 von dem Machine Learning-Modell 2 auf Qualitätsprognosen 13 für die jeweiligen Exemplare des Produkts 1 abgebildet. Für jedes dieser Exemplare des Produkts 1 wird weiterhin in Schritt 250 eine anhand mindestens einer physikalischen Beobachtung dieses Exemplars des Produkts 1, und/oder anhand mindestens eines physikalischen Funktionstests dieses Exemplars des Produkts 1, während oder nach der Herstellung erfasstes Qualitätsmaß 13# bereitgestellt.

Als Machine Learning-Modell 2 kann gemäß Block 205 insbesondere beispielsweise ein XGBoost-Modell, eine Support Vector Machine, und/oder ein Explainable Boosting-Modell gewählt werden.

In Schritt 270 werden die Qualitätsprognosen 13 mit den hierzu korrespondierenden Qualitätsmaßen 13# verglichen. Anhand des Ergebnisses dieses Vergleichs 270 werden in Schritt 280 Modell-Parameter 2a, die das Verhalten des Machine Learning-Modells 2 charakterisieren, optimiert mit dem Ziel, dass bei weiterer Verarbeitung von Parametern 11 durch das Machine Learning-Modell 2 die Qualitätsprognosen 13 näher an die Qualitätsmaße 13# kommen. Das Training kann fortgesetzt werden, bis ein beliebiges Abbruchkriterium erfüllt ist. Ein solches Abbruchkriterium kann insbesondere beispielsweise beinhalten, dass etwa eine an Hand von Testdaten oder Validierungsdaten gemessene Genauigkeit der Qualitätsprognosen 13, erfüllt ist oder die Differenz zwischen Qualitätsprognose und Qualitätsmaß einen vorgegebenen Schwellwert unterschreitet. Der fertig trainierte Zustand der Modell-Parameter 2a ist mit dem Bezugszeichen 2a* bezeichnet.

Optional können in Schritt 290 zusätzlich aus dem trainierten Machine Learning-Modell 2 Wirkzusammenhänge 11* zwischen verschiedenen Parametern 11, und/oder mindestens ein Toleranzbereich 11** für mindestens einen Parameter 11, ausgewertet werden.

## Patentansprüche

1. Verfahren (100, 200) zur Qualitätskontrolle eines in Serie gefertigten Produkts (1) mit den Schritten:
• während der Herstellung des Produkts (1) wird eine Vielzahl von Parametern (11), die den Herstellungsprozess charakterisieren, aufgezeichnet (110);
• das Produkt (1) wird einer Kontrolle unterzogen (120), wobei diese Kontrolle mindestens eine physikalische Beobachtung des Produkts (1), und/oder mindestens einen physikalischen Funktionstest des Produkts (1), sowie einen Vergleich des bei der Beobachtung, bzw. bei dem Funktionstest, erhaltenen Ergebnisses mit einer vorgegebenen Referenz beinhaltet und wobei durch diesen Vergleich eine Qualitätsbeurteilung (12) des Produkts (1) ermittelt wird;
• in Antwort darauf, dass diese Qualitätsbeurteilung (12) ein vorgegebenes Kriterium (130) erfüllt, werden die während der Herstellung des Produkts (1) aufgezeichneten Parameter (11) einem trainierten Machine Learning-Modell (2) zugeführt und von diesem trainierten Machine Learning-Modell (2) auf eine Qualitätsprognose (13) für das Produkt (1) abgebildet (140);
• es wird geprüft (150), ob die Qualitätsprognose (13) im Einklang mit der Qualitätsbeurteilung (12) steht;
• wenn dies der Fall ist, werden die aufgezeichneten Parameter (11) einem Erklärer (21) für das Machine Learning-Modell (2) zugeführt (160), wobei dieser Erklärer (21) einzelnen aufgezeichneten Parametern (11), und/oder Kombinationen aus den aufgezeichneten Parametern (11), quantitative Beiträge (14) zu der Qualitätsprognose (13) zuordnet;
• aus den quantitativen Beiträgen (14) wird eine wahrscheinliche und/oder wahrscheinlichste Ursache (15) für die bei der Kontrolle (120) erhaltene Qualitätsbeurteilung (12) ausgewertet (170),
wobei das Machine Learning-Modell (2) für die Qualitätsprognose des in Serie gefertigten Produkts (1) mit den folgenden Schritten trainiert wird:
• es wird eine Vielzahl von Parametern (11) bereitgestellt (210), die den Herstellungsprozess des Produkts (1) charakterisieren und während der Herstellung einer Vielzahl von Exemplaren des Produkts (1) jeweils aufgezeichnet wurden;
• die Parameter (11) werden anhand mindestens eines vorgegebenen Kriteriums nach auffälligen Veränderungen durchsucht (220);
• in Antwort darauf, dass mindestens eine auffällige Veränderung aufgefunden wird, wird diese auffällige Veränderung entfernt (230), und/oder es wird eine Erklärung für die auffällige Veränderung von einem Operator angefordert und den Parametern (11) hinzugefügt (240);
• für jedes Exemplar des Produkts (1), für das Parameter (11) bereitgestellt wurden, wird ein anhand mindestens einer physikalischen Beobachtung dieses Exemplars des Produkts (1), und/oder anhand mindestens eines physikalischen Funktionstests dieses Exemplars des Produkts (1), während oder nach der Herstellung erfasstes Qualitätsmaß (13#) bereitgestellt (250);
• die bereitgestellten Parameter (11) werden von dem Machine Learning-Modell (2) auf Qualitätsprognosen (13) für die jeweiligen Exemplare des Produkts (1) abgebildet (260);
• die Qualitätsprognosen (13) werden mit den hierzu korrespondierenden Qualitätsmaßen (13#) verglichen (270);
• Modell-Parameter (2a), die das Verhalten des Machine Learning-Modells (2) charakterisieren, werden optimiert (280) mit dem Ziel, dass bei weiterer Verarbeitung von Parametern (11) durch das Machine Learning-Modell (2) die Qualitätsprognosen (13) näher an die Qualitätsmaße (13#) kommen.

2. Verfahren (100, 200) nach Anspruch 1, wobei die die Parameter (11), die den Herstellungsprozess charakterisieren,
• Einstellungen mindestens einer Maschine, die das Produkt (1) während des Herstellungsprozesses bearbeitet, und/oder
• eine seit der letzten Vornahme von Wartungs- und/oder Einstellarbeiten an mindestens einer Maschine, die das Produkt (1) während des Herstellungsprozesses bearbeitet, verstrichene Zeitdauer, und/oder
• ein Maß für einen Abnutzungszustand mindestens eines Werkzeugs, das während des Herstellungsprozesses in Kontakt mit dem Produkt (1) kommt, und/oder
• Messwerte aus der Messung mindestens einer physikalischen Messgröße am in Herstellung befindlichen Produkt (1), an einem für die Herstellung verwendeten Vorprodukt und/oder in der Umgebung, in der das Produkt (1) hergestellt wird, und/oder
• mindestens einen Zeitstempel mindestens eines Zeitpunkts, zu dem mindestens ein Bearbeitungsschritt an dem Produkt (1) vorgenommen wurde,
umfassen.

3. Verfahren (100, 200) nach einem der Ansprüche 1 bis 2, wobei während der Herstellung des Produkts (1) zwischen 50 und 10.000, bevorzugt zwischen 100 und 2.000, Parameter (11) aufgezeichnet werden (111).

4. Verfahren (100, 200) nach einem der Ansprüche 1 bis 3, wobei die Parameter (11) aufgezeichnet werden (112), während das Produkt (1) zwischen 10 und 200, bevorzugt zwischen 50 und 150, Herstellungsschritte durchläuft.

5. Verfahren (100, 200) nach einem der Ansprüche 1 bis 4, wobei ein Erklärer (21) gewählt wird (161), der eine Approximation des Machine Learning-Modells (2) umfasst, die das Verhalten des Machine Learning-Modells (2) zumindest lokal nachbildet und eine geringere Komplexität aufweist als das Machine Learning-Modell (2).

6. Verfahren (100, 200) nach Anspruch 5, wobei ein Erklärer (21) gewählt wird (161a), der mindestens eine Local Interpretable Model-Agnostic Explanation, LIME, der Qualitätsprognose (13) liefert.

7. Verfahren (100, 200) nach einem der Ansprüche 1 bis 6, wobei ein Erklärer (21) gewählt wird (162), der dazu ausgebildet ist, ausgehend von Abfolgen der Parameter (11), in denen ein konkreter Parameter (11') oder eine konkrete Kombination von Parametern (11') nicht vorkommt, jeweils den marginalen Beitrag zur Qualitätsprognose zu ermitteln, der durch das Hinzufügen des konkreten Parameters (11'), bzw. der konkreten Kombination von Parametern (11'), erzielt wird.

8. Verfahren (100, 200) nach Anspruch 7, wobei ein Erklärer (21) gewählt wird (162a), der dazu ausgebildet ist, Shapley-Werte für den konkreten Parameter (11'), bzw. für die konkrete Kombination von Parametern (11'), in Bezug auf das Machine Learning-Modell (2) oder einen bedingten Erwartungswert des Machine Learning-Modells zu ermitteln.

9. Verfahren (100, 200) nach einem der Ansprüche 1 bis 8, wobei aus den quantitativen Beiträgen (14), und/oder aus der ausgewerteten wahrscheinlichen und/oder wahrscheinlichsten Ursache (15), zusätzlich mindestens ein Vorschlag (16) für eine Änderung der Prozessführung des Herstellungsprozesses ausgewertet wird (180), nach deren Implementierung im Herstellungsprozess die dann hergestellten Produkte (1) bei der Kontrolle (120) voraussichtlich näher an der vorgegebenen Referenz liegen als die vor der Implementierung dieser Änderung hergestellten Produkte (1).

10. Verfahren (100, 200) nach einem der vorherigen Ansprüche, wobei Parameter gewählt werden (211), die mindestens teilweise in einer vor Beginn der Serienfertigung des Produkts (1) liegenden Musterbauphase des Produkts (1) erfasst wurden.

11. Verfahren (100, 200) nach einem der vorherigen Ansprüche, wobei aus dem trainierten Machine Learning-Modell (2) Wirkzusammenhänge (11*) zwischen verschiedenen Parametern (11), und/oder mindestens ein Toleranzbereich (11**) für mindestens einen Parameter (11), ausgewertet werden (290).

12. Verfahren (100, 200) nach einem der vorherigen Ansprüche, wobei ein XGBoost-Modell, eine Support Vector Machine, und/oder ein Explainable Boosting-Modell, als Machine Learning-Modell (2) gewählt wird (105, 205).

13. Computerprogramm, enthaltend maschinenlesbare Anweisungen, die,
wenn sie auf einem oder mehreren Computern als Teil eines Systems zur Qualitätskontrolle ausgeführt werden, das System zur Qualitätskontrolle und den oder die Computer dazu veranlassen, ein Verfahren (100, 200) nach einem der vorherigen Ansprüche auszuführen.

14. Maschinenlesbarer Datenträger mit dem Computerprogramm nach Anspruch 13.

15. System zur Qualitätskontrolle, umfassend einen oder mehrere Computer, ausgerüstet mit dem Computerprogramm nach Anspruch 13, und/oder mit dem maschinenlesbaren Datenträger nach Anspruch 14.

## Claims

1. Method (100, 200) for quality control of a mass-produced product (1), comprising the following steps:
• a multiplicity of parameters (11) that characterize the manufacturing process are recorded (110) during manufacture of the product (1);
• the product (1) is subjected to a control (120), this control being at least one physical observation of the product (1) and/or at least one physical function test on the product (1), and also a comparison of the result obtained during the observation and/or the function test with a specified reference, and this comparison being used to determine a quality assessment (12) of the product (1);
• in response to this quality assessment (12) meeting a specified criterion (130), the parameters (11) recorded during manufacture of the product (1) are fed to a trained machine learning model (2) and mapped (140) from that trained machine learning model (2) to a quality forecast (13) for the product (1);
• a check (150) is performed to ascertain whether the quality forecast (13) is in line with the quality assessment (12);
• if this is the case, the recorded parameters (11) are fed (160) to an explainer (21) for the machine learning model (2), this explainer (21) assigning individual recorded parameters (11) and/or combinations of the recorded parameters (11) quantitative contributions (14) to the quality forecast (13);
• the quantitative contributions (14) are used to evaluate (170) a probable and/or most probable cause (15) of the quality assessment (12) obtained during the control (120),
wherein the machine learning model (2) is trained to forecast the quality of the mass-produced product (1) using the following steps:
• a multiplicity of parameters (11) are provided (210) that characterize the manufacturing process of the product (1) and have been recorded during manufacture of each of a multiplicity of copies of the product (1);
• the parameters (11) are searched (220) for conspicuous changes on the basis of at least one specified criterion;
• in response to at least one conspicuous change being found, that conspicuous change is removed (230) and/or an explanation for the conspicuous change is requested by an operator and added (240) to the parameters (11);
• for each copy of the product (1) for which parameters (11) have been provided, a quality measure (13#) acquired on the basis of at least one physical observation of that copy of the product (1) and/or on the basis of at least one physical function test on that copy of the product (1), during or after manufacture, is provided (250);
• the provided parameters (11) are mapped (260) from the machine learning model (2) to quality forecasts (13) for the respective copies of the product (1);
• the quality forecasts (13) are compared (270) with the corresponding quality measures (13#);
• model parameters (2a) that characterize the behaviour of the machine learning model (2) are optimized (280) with the aim of the quality forecasts (13) coming closer to the quality measures (13#) with further processing of parameters (11) by the machine learning model (2).

2. Method (100, 200) according to Claim 1, wherein the parameters (11) that characterize the manufacturing process comprise
• settings of at least one machine that processes the product (1) during the manufacturing process, and/or
• a period of time that has elapsed since maintenance and/or adjustment was last carried out on at least one machine that processes the product (1) during the manufacturing process, and/or
• a measure of a wear condition of at least one tool that comes into contact with the product (1) during the manufacturing process, and/or
• measured values from the measurement of at least one physical measured variable on the product (1) being manufactured, on a precursor used for the manufacture and/or in the environment in which the product (1) is manufactured, and/or
• at least one time stamp of at least one time at which at least one processing step has been carried out on the product (1).

3. Method (100, 200) according to either of Claims 1 to 2, wherein between 50 and 10 000, preferably between 100 and 2000, parameters (11) are recorded (111) during manufacture of the product (1).

4. Method (100, 200) according to one of Claims 1 to 3, wherein the parameters (11) are recorded (112), while the product (1) passes through between 10 and 200, preferably between 50 and 150, manufacturing steps.

5. Method (100, 200) according to one of Claims 1 to 4, wherein an explainer (21) is chosen (161) that comprises an approximation of the machine learning model (2) that at least locally simulates the behaviour of the machine learning model (2) and has a lower complexity than the machine learning model (2).

6. Method (100, 200) according to Claim 5, wherein an explainer (21) is chosen (161a) that provides at least one local interpretable model-agnostic explanation, LIME, of the quality forecast (13).

7. Method (100, 200) according to one of Claims 1 to 6, wherein an explainer (21) is chosen (162) that is configured to determine, from sequences of the parameters (11) in which a specific parameter (11') or a specific combination of parameters (11') does not occur, the particular marginal contribution to the quality forecast that is achieved by adding the specific parameter (11'), or the specific combination of parameters (11').

8. Method (100, 200) according to Claim 7, wherein an explainer (21) is chosen (162a) that is configured to determine Shapley values for the specific parameter (11'), or for the specific combination of parameters (11'), with respect to the machine learning model (2) or a conditional expectation value of the machine learning model.

9. Method (100, 200) according to one of Claims 1 to 8, wherein the quantitative contributions (14) and/or the evaluated probable and/or most probable cause (15) is/are used to additionally evaluate (180) at least one proposal (16) for a change in the process control of the manufacturing process after the implementation of which in the manufacturing process the products (1) that are then manufactured are expected to be closer to the specified reference during the control (120) than the products (1) that were manufactured before this change was implemented.

10. Method (100, 200) according to one of the preceding claims, wherein at least some parameters are chosen (211) that have been acquired in a prototyping phase of the product (1) before the start of mass production of the product (1).

11. Method (100, 200) according to one of the preceding claims, wherein the trained machine learning model (2) is used to evaluate (290) correlations (11*) between different parameters (11) and/or at least one tolerance range (11**) for at least one parameter (11).

12. Method (100, 200) according to one of the preceding claims, wherein an XGBoost model, a support vector machine and/or an explainable boosting model is chosen (105, 205) as the machine learning model (2).

13. Computer program containing machine-readable instructions that, when executed on one or more computers as part of a system for quality control, cause the system for quality control and the computer or computers to perform a method (100, 200) according to one of the preceding claims.

14. Machine-readable data carrier comprising the computer program according to Claim 13.

15. System for quality control, comprising one or more computers, equipped with the computer program according to Claim 13 and/or with the machine-readable data carrier according to Claim 14.

## Revendications

1. Procédé (100, 200) de contrôle qualité d'un produit (1) fabriqué en série, comprenant les étapes suivantes :
• pendant la fabrication du produit (1), une pluralité de paramètres (11) caractérisant le processus de fabrication sont enregistrés (110) ;
• le produit (1) est soumis à un contrôle (120), ce contrôle comprenant au moins une observation physique du produit (1), et/ou au moins un test de fonctionnement physique du produit (1), ainsi qu'une comparaison du résultat obtenu lors de l'observation ou lors du test de fonctionnement avec une référence prédéfinie, et cette comparaison permettant de déterminer une évaluation de la qualité (12) du produit (1) ;
• en réponse au fait que cette évaluation de la qualité (12) satisfait à un critère prédéfini (130), les paramètres (11) enregistrés pendant la fabrication du produit (1) sont transmis à un modèle d'apprentissage automatique entraîné (2) et ce modèle d'apprentissage automatique entraîné (2) les met en correspondance (140) avec une prévision de qualité (13) pour le produit (1) ;
• il est vérifié (150) si la prévision de qualité (13) est cohérente avec l'évaluation de la qualité (12) ;
• si tel est le cas, les paramètres enregistrés (11) sont transmis (160) à un explicateur (21) pour le modèle d'apprentissage automatique (2), cet explicateur (21) attribuant aux paramètres enregistrés individuels (11), et/ou à des combinaisons des paramètres enregistrés (11) des contributions quantitatives (14) à la prévision de qualité (13) ;
• à partir des contributions quantitatives (14), une cause probable et/ou la cause la plus probable (15) de l'évaluation de la qualité (12) obtenue lors du contrôle (120) est évaluée (170),
le modèle d'apprentissage automatique (2), pour la prévision de la qualité du produit (1) fabriqué en série, étant entraîné selon les étapes suivantes :
• une pluralité de paramètres (11) sont fournis (210), qui caractérisent le processus de fabrication du produit (1) et ont chacun été enregistrés pendant la fabrication d'une pluralité d'exemplaires du produit (1) ;
• les paramètres (11) sont recherchés (220) selon au moins un critère prédéfini afin de détecter des changements inhabituels ;
• en réponse à la détection d'au moins un changement inhabituel, ce changement inhabituel est supprimé (230) et/ou une explication de ce changement inhabituel est demandée à un opérateur et est ajoutée (240) aux paramètres (11) ;
• pour chaque exemplaire du produit (1) pour lequel des paramètres (11) ont été fournis, il est fourni (250) une mesure de qualité (13#) enregistrée pendant ou après la fabrication sur la base d'au moins une observation physique de cet exemplaire du produit (1) et/ou sur la base d'au moins un test de fonctionnement physique de cet exemplaire du produit (1) ;
• les paramètres fournis (11) sont mis en correspondance (260) par le modèle d'apprentissage automatique (2) avec des prévisions de qualité (13) pour les exemplaires respectifs du produit (1) ;
• les prévisions de qualité (13) sont comparées (270) aux mesures de qualité correspondant à celles-ci (13#) ;
• les paramètres du modèle (2a) qui caractérisent le comportement du modèle d'apprentissage automatique (2) sont optimisés (280) dans le but de garantir que, lors du traitement ultérieur des paramètres (11) par le modèle d'apprentissage automatique (2), les prévisions de qualité (13) se rapprochent des mesures de qualité (13#).

2. Procédé (100, 200) selon la revendication 1, dans lequel les paramètres (11) qui caractérisent le processus de fabrication comprennent
• des réglages d'au moins une machine qui traite le produit (1) pendant le processus de fabrication, et/ou
• une durée écoulée depuis la dernière exécution de travaux de maintenance et/ou de réglage sur au moins une machine qui traite le produit (1) pendant le processus de fabrication, et/ou
• une mesure d'un état d'usure d'au moins un outil qui entre en contact avec le produit (1) pendant le processus de fabrication, et/ou
• des valeurs mesurées à partir de la mesure d'au moins un paramètre physique sur le produit (1) en cours de fabrication, sur un produit intermédiaire utilisé pour la fabrication et/ou dans l'environnement dans lequel le produit (1) est fabriqué, et/ou
• au moins un horodatage d'au moins un moment auquel au moins une étape de traitement a été effectuée sur le produit (1).

3. Procédé (100, 200) selon l'une des revendications 1 et 2, dans lequel, pendant la fabrication du produit (1), entre 50 et 10 000, de préférence entre 100 et 2 000, paramètres (11) sont enregistrés (111).

4. Procédé (100, 200) selon l'une des revendications 1 à 3, dans lequel les paramètres (11) sont enregistrés (112) pendant que le produit (1) passe par entre 10 et 200, de préférence entre 50 et 150, étapes de fabrication.

5. Procédé (100, 200) selon l'une des revendications 1 à 4, dans lequel il est sélectionné (161) un explicateur (21) qui comprend une approximation du modèle d'apprentissage automatique (2) qui reproduit au moins localement le comportement du modèle d'apprentissage automatique (2) et présente une complexité moindre que le modèle d'apprentissage automatique (2).

6. Procédé (100, 200) selon la revendication 5, dans lequel il est sélectionné (161a) un explicateur (21) qui fournit au moins une explication locale interprétable indépendante du modèle, LIME, de la prévision de qualité (13).

7. Procédé (100, 200) selon l'une des revendications 1 à 6, dans lequel il est sélectionné (162) un explicateur (21) qui est conçu pour déterminer, à partir de séquences de paramètres (11) dans lesquelles un paramètre spécifique (11') ou une combinaison spécifique de paramètres (11') n'apparaît pas, chaque fois la contribution marginale à la prédiction de qualité, qui est obtenue par l'ajout du paramètre spécifique (11') ou de la combinaison spécifique de paramètres (11').

8. Procédé (100, 200) selon la revendication 7, dans lequel il est sélectionné (162a) un explicateur (21) qui est conçu pour déterminer des valeurs de Shapley pour le paramètre spécifique (11') ou pour la combinaison spécifique de paramètres (11') par rapport au modèle d'apprentissage automatique (2) ou à une valeur attendue conditionnelle du modèle d'apprentissage automatique.

9. Procédé (100, 200) selon l'une des revendications 1 à 8, dans lequel, à partir des contributions quantitatives (14) et/ou de la cause probable et/ou la plus probable évaluée (15), en outre au moins une proposition (16) pour une modification de la conduite du processus de fabrication est évaluée (180), après la mise en œuvre de laquelle dans le processus de fabrication, les produits (1) alors fabriqués sont, lors du contrôle (120), probablement plus proches de la référence prédéfinie que les produits (1) fabriqués avant la mise en œuvre de cette modification.

10. Procédé (100, 200) selon l'une des revendications précédentes, dans lequel il est sélectionné (211) des paramètres qui ont été enregistrés au moins en partie dans une phase de construction de prototypes du produit (1) précédant le début de la fabrication en série du produit (1).

11. Procédé (100, 200) selon l'une des revendications précédentes, dans lequel des interactions (11*) entre différents paramètres (11) et/ou au moins une plage de tolérance (11**) pour au moins un paramètre (11) sont évaluées (290) à partir du modèle d'apprentissage automatique entraîné (2).

12. Procédé (100, 200) selon l'une des revendications précédentes, dans lequel un modèle XGBoost, une machine à vecteurs de support et/ou un modèle Explainable Boosting est sélectionné (105, 205) en tant que modèle d'apprentissage automatique (2).

13. Programme informatique contenant des instructions lisibles par machine qui, lorsqu'elles sont exécutées sur un ou plusieurs ordinateurs dans le cadre d'un système de contrôle qualité, font en sorte que le système de contrôle qualité et le ou les ordinateurs mettent en œuvre un procédé (100, 200) selon l'une des revendications précédentes.

14. Support de données lisible par machine, contenant le programme informatique selon la revendication 13.

15. Système de contrôle qualité comprenant un ou plusieurs ordinateurs équipés du programme informatique selon la revendication 13 et/ou du support de données lisible par machine selon la revendication 14.
